# EUROPEAN PATENT SPECIFICATION

(11) **EP 2 254 367 B1**
(45) Date of publication and mention of the grant of the patent: **24.04.2013**
(21) Application number: 10163554.8
(22) Date of filing: 21.05.2010
(51) Int. Cl.: H04W 36/38

(54) **Circuit switching handover method and device**
Leitungsvermittlungs-Übergabeverfahren und -vorrichtung
Procédé de transfert de commutation de circuit et dispositif

(30) Priority: 21.05.2009 CN 200910141693
(43) Date of publication of application: 24.11.2010
(73) Proprietor: Huawei Technologies Co., Ltd., Shenzhen, Guangdong 518129 (CN)
(72) Inventor: Hu, Xiaoqun, 518129, Shenzhen Guangdong (CN); Xu, Liang, 518129, Shenzhen Guangdong (CN); Pan, Yingxin, 518129, Shenzhen Guangdong (CN); Weng, Wulin, 518129, Shenzhen Guangdong (CN)
(74) Representative: Isarpatent

(56) References cited:
- EP-A1- 1 107 636
- EP-A1- 1 903 817
- US-A1- 2005 030 958
- NOKIA SIEMENS NETWORKS ET AL: "Introduction of Enhanced Relocation" 3GPP DRAFT; R3-083220_TR25.931, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Prague, Czech Republic; 20081105, 5 November 2008 (2008-11-05), XP050324443 [retrieved on 2008-11-05]
- NOKIA SIEMENS NETWORKS ET AL: "Application of Enhanced Relocation to CS Core Network" 3GPP DRAFT; R3-080788, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Shenzhen, China; 20080326, 26 March 2008 (2008-03-26), XP050163991 [retrieved on 2008-03-26]

## Description

### FIELD OF THE TECHNOLOGY

The present application relates to the field of communications technology, and more particularly to a Circuit Switching (CS) handover method and device.

### BACKGROUND OF THE INVENTION

Circuit Switching (CS) means a process in which connections are established according to requirements and the connections are allowed for dedicated use until the connections are released. A CS network includes a physical path and supports a single connection mode between two nodes during network connection. When real-time data (such as audio and video data) is transported or when high Quality of Service (QoS) is required, a CS network is generally used. For example, a conventional voice service is a process of implementing circuit switching through a public switch telephone network (PSTN).

In a mobile communications system, a CS mode is generally used to bear voice. The mobile communications system currently includes a Global System for Mobile Communications (GSM) system, a Universal Mobile Telecommunications System (UMTS) system, a Long Term Evolution (LTE) system, and a Code Division Multiple Access (CDMA) system. In order to support seamless user roaming, the mobile communications system provides a voice handover (that is, CS handover) between different systems. The CS handover may be implemented inside a network of a same radio access technology (RAT) or between networks of different RATs. For example, in existing networks, networks of various RATs coexist, such as 2^{nd} generation (2G) GSM, 3^{rd} generation (3G) UMTS and CDMA2000, and the CS handover may be a voice handover between the GSM and the UMTS. The handover may be a coverage-based CS handover, a service-based CS handover, or a load-based CS handover. The GSM system is a 2G system. The UMTS is a 3G system, and includes Wideband CDMA (WCDMA), Time Division Synchronous CDMA (TD-SCDMA), etc.

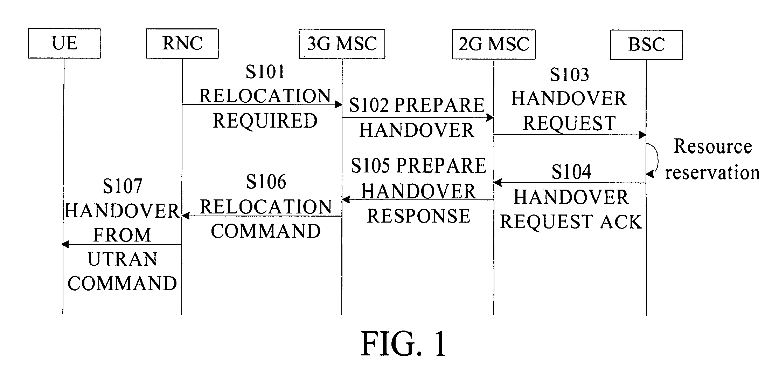

In the following, a CS handover from a 3G TD-SCDMA system to a 2G GSM system is taken as an example to introduce a handover process in the prior art. Referring to FIG. 1, a CS handover process from 3G to 2G in the prior art includes the following steps.

In step S 101, a Source Radio Network Controller (SRNC) in the TD-SCDMA decides to execute an Inter-RAT handover to the GSM and sends through an Iu interface a RELOCATION REQUIRED message to a 3G Core Network (CN).

In step S102, the 3G CN sends a Mobile Application Part (MAP) PREPARE HANDOVER message to a GSM Mobile Switching Center (MSC).

In step S103, the GSM MSC sends a HANDOVER REQUEST message to a Base Station Controller (BSC) to initiate a handover preparation process.

In step S 104, the BSC performs handover preparation to reserve resources, and then sends a HANDOVER REQUEST ACKNOWLEDGEMENT (ACK) message to the GSM MSC.

In step S105, the GSM MSC and a Base Station Subsystem (BSS) complete handover preparation, and the MSC returns an MAP/E PREPARE HANDOVER RESPONSE message to the 3G CN.

In step S106, the 3G CN sends a Radio Access Network Application Part (RANAP) RELOCATION COMMAND message to the SRNC as a response to the initial request of the SRNC.

In step S107, the SRNC sends a HANDOVER FROM UTRAN COMMAND message to a User Equipment (UE) through an existing Radio Resource Control (RRC) connection to command the UE to execute the Inter-RAT handover.

Steps S101 to S106 belong to the CS handover preparation stage, which includes a signalling process of an A interface (that is, between the GSM MSC and the BSC) and a resource reservation process. Step S107 belongs to a handover execution stage, during which the SRNC formally sends a handover command to the UE.

In the implementation of the present application, the inventor found that in the prior art that, a long handover preparation time is required, resulting in low handover efficiency. Moreover, in some scenarios, the long handover preparation time may affect normal transport of data.

EP 1 903 817 A1 provides a method for inter-system handover. The method includes: A. in handing over a user terminal from a serving communication system to a target cell of a target communication system, changing, by a serving communication system apparatus or a target communication system apparatus, handover-related information in the serving communication system into the handover-related information supported by the target communication system; B. interacting, by the user terminal, with the serving communication system and the target communication system for the handover. The method can insure successful handover of user terminals from a serving communication system to a target communication system.

NSN, R3-083220 describes an inter-RNC handover, both RNC are served by the same MSC. The source RNC sends an ENHANCED RELOCATION REQUEST message to the target RNC.

### SUMMARY OF THE INVENTION

Accordingly, the present application is directed to a Circuit Switching (CS) handover method and device, so as to shorten the handover preparation time and thus improve the handover efficiency.

An aspect of the present application provides a CS handover method.

A source controller that is served by a source mobile switching center, MSC, sends an ENHANCED RELOCATION REQUEST message to a target controller that is served by a target MSC through an inter-controller interconnection interface, so as to instruct the target controller to reserve wireless channel resources in a target cell.

The source controller instructs the target MSC through the source MSC to send a request for handover to the target controller, so as to initiate handover preparation in the target cell.

After an ENHANCED RELOCATION RESPONSE message from the target controller through the inter-controller interconnection interface is received, a command for handover is sent to a terminal.

Another aspect of the present application provides a CS handover method.

A target controller that is served by a target MSC receives, through an inter-controller interconnection interface, an ENHANCED RELOCATION REQUEST message sent by a source controller that is served by a source MSC.

The target controller receives a request for handover sent by the target MSC.

The target controller reserves wireless channel resources.

After the reservation is complete, an ENHANCED RELOCATION RESPONSE message is sent to the source controller through the inter-controller interconnection interface.

Further another aspect of the present application provides a CS handover device located at a source controller that is served by a source MSC end, and the CS handover device includes a first handover process initiation unit, a second handover process initiation unit, a receiving unit, and a command sending unit.

The first handover process initiation unit is configured to send a ENHANCED RELOCATION REQUEST message to a target controller that is served by a target MSC through an inter-controller interconnection interface, so as to instruct the target controller to reserve wireless channel resources in a target cell.

The second handover process initiation unit is configured to instruct the target MSC, through the source MSC to send a request for handover to the target controller, so as to initiate handover preparation in the target cell.

The receiving unit is configured to receive, through the inter-controller interconnection interface, an ENHANCED RELOCATION RESPONSE message sent by the target controller.

The command sending unit is configured to send command for handover to a terminal after
the ENHANCED RELOCATION RESPONSE message from the target controller is received.

Further another aspect of the present application provides a CS handover device located at a target controller that is served by a target MSC end, and the CS handover device includes a first receiving unit, a second receiving unit, a resource reserving unit, and a sending unit.

The first receiving unit is configured to receive, through an inter-controller interconnection interface, an ENHANCED RELOCATION REQUEST message sent by a source controller that is served by a source MSC.

The second receiving unit is configured to receive a request for handover sent by the target MSC.

The resource reserving unit is configured to reserve wireless channel resources.

The sending unit is configured to send an ENHANCED RELOCATION RESPONSE message to the source controller through the inter-controller interconnection interface after the reservation is complete.

In the above solutions, the handover preparation time can be shortened, thereby reducing the probability of phenomena such as call drop due to excessively long handover preparation time.

### BRIEF DESCRIPTION OF THE DRAWINGS

FIG. 1 is a simple flow chart of a CS handover in the prior art;
FIG. 2 is a simple flow chart of a CS handover method according to an embodiment of the present application;
FIG. 3 is a simple flow chart of another CS handover method according to an embodiment of the present application;
FIG. 4 is a simple schematic view of a network architecture of a CS handover according to an embodiment of the present application;
FIG. 5 is a simple flow chart of still another CS handover method according to an embodiment of the present application;
FIG. 6 is a simple schematic view of a CS handover device according to an embodiment of the present application; and
FIG. 7 is a simple schematic view of another CS handover device according to an embodiment of the present application.

### DETAILED DESCRIPTION OF THE EMBODIMENTS

In order to make the objectives, features, and advantages of the present application more comprehensible, the present application is further described in detail in the following through specific embodiments with reference to the accompanying drawings.

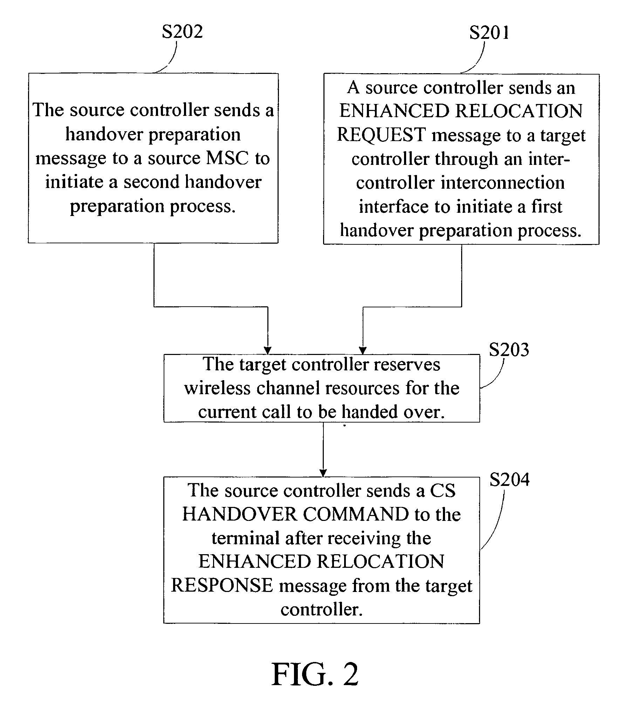

First embodiment: Referring to FIG. 2, a CS handover method according to the first embodiment of the present application includes the following steps.

In step S201, a source controller triggers a handover of a calling terminal in a cell (i.e. source cell) controlled by the source controller to another cell (i.e. target cell), sends an ENHANCED RELOCATION REQUEST message to a target controller through an inter-controller interconnection interface to initiate a first handover preparation process, so as to instruct the target controller to reserve wireless channel resources in the target cell, and waits for a response from the target controller.

The source controller may monitor the current call and decide whether a CS handover is required, for example, the source controller decides whether a CS handover is required according to a measurement report reported by the terminal. If the source controller decides that a certain call requires a CS handover, the source controller selects a suitable target cell for the call. The methods of decision-making and selection of the target cell may be performed with reference to the prior art, so the details will not be described herein again.

A controller of the target cell is referred to as a target controller.

In another embodiment of the present application, the current call may be a voice call or a Circuit Switched Data (CSD) service, or other service.

In the first handover preparation process, the ENHANCED RELOCATION REQUEST message may be sent to the target controller through an inter-controller interconnection interface between the source controller and the target controller. The ENHANCED RELOCATION REQUEST message may include, but is not limited to, a part of or all of the following information: a source cell identity (ID) (such as a cell global ID (CGI), a radio network controller (RNC)-ID, and a Cell ID), a target cell ID (such as a CGI, an RNC-ID, and a Cell ID), a source controller ID (such as an RNC-ID), a target controller ID, a call ID, a terminal ID (such as an international mobile subscriber ID (IMSI) and a temporary mobile subscriber ID (TMSI)), a channel type, speech encoding and decoding (such as adaptive multi-rate (AMR) 12.2, half rate (HR), and full rate (FR)), and supported capabilities of the terminal (such as Classmark 1, Classmark 2, and Classmark 3), user plane information, transport layer information (for example, including a transport layer address and a binding ID), and speech version information. Before the ENHANCED RELOCATION REQUEST message is sent, a transport connection for signalling transport needs to be established on the inter-controller interconnection interface between the source controller and the target controller, which may be connection oriented or connectionless. A user plane and/or control plane link on the inter-controller interconnection interface is identified on the source controller and target controller. For example, the link can be identified by a transport layer address (an Internet Protocol (IP) address and a User Datagram Protocol (UDP) port number) of the source controller and a transport layer address (an IP address and a UDP port number) of the target controller.

In step S202, the source controller sends a handover preparation message to a mobile switching center (MSC) that serves the source controller (that is, a source MSC) to initiate a second handover preparation process, so as to initiate handover preparation in the target cell, which includes reserving wireless channel resources in the target cell, and establishing transport connections between the target cell and the target controller and between the target controller and an MSC that serves the target controller (that is, a target MSC).

According to a standard process, the sending of the handover preparation message to the source MSC by the source controller results in that the target MSC sends a request for handover to the target controller to request handover preparation for the current handover.

Steps S201 and S202 may be performed in any order, that is, step S201 may be performed before, after, or concurrently with step S202.

In step S203, the target controller reserves wireless channel resources for the current call to be handed over, for example, allocates suitable wireless channel resources according to information such as speech encoding and decoding information of the current call and supported capabilities of the terminal; after the resource allocation is complete, an ENHANCED RELOCATION RESPONSE message is returned to the source controller through a signalling channel of the inter-controller interconnection interface. The response message carries information of the resources allocated to the current call, including, but is not limited to, a part of or all of the following information: cell description, a channel type, encoding and decoding information, synchronization information, and encryption information.

In step S204, after receiving the ENHANCED RELOCATION RESPONSE message from the target controller, the source controller sends a command for handover to the terminal.

The ENHANCED RELOCATION RESPONSE message carries information about resource allocation. After the source controller receives the ENHANCED RELOCATION RESPONSE message, the source controller may send the command for handover to the terminal without waiting for a PREPARE HANDOVER RESPONSE message from the source MSC. After receiving the HANDOVER COMMAND, the terminal performs handover and is connected to the target cell from the source cell according to the HANDOVER COMMAND. In this way, the terminal may continue the current call under the target cell, the target controller, and the target MSC. In the handover preparation process, terrestrial link resources also need to be reserved (including establishment of transport connections from the target MSC to the target controller and from the target controller to a base station of the target cell, and the process may be accomplished through step S202), so as to ensure normal data and signalling transport after the terminal is handed over to the target cell.

It can be seen that, in order to save the handover preparation time, in the embodiment of the present application, the process of reserving wireless channel resources in the target cell may be performed in advance, and the transport connection from the target MSC to the target controller is established in the second handover preparation process. The transport connection from the target controller to the base station of the target cell may be established in the first handover preparation process or the second handover preparation process.

Specifically, the method according to the embodiment of the present application is to initiate two different handover preparation processes after the source controller makes a handover decision. The second handover preparation process may be performed according to the following standard method: After selecting a target cell, the source controller sends the handover preparation message (a message complying with protocol standards) to the source MSC, and after receiving the handover preparation message, the source MSC triggers the target MSC to send the request for handover to the target controller of the target cell, so as to request the target controller to reserve wireless channel resources; at the same time, the target MSC initiates to establish a transport connection from the target MSC to the target controller. In the first handover preparation process, the ENHANCED RELOCATION REQUEST message is sent through the inter-controller interconnection interface, so as to request the target controller to reserve wireless channel resources. After receiving the ENHANCED RELOCATION REQUEST message sent by the source controller, the target controller reserves wireless channel resources in the target cell. The transport connection from the target controller to the target cell or the base station of the target cell may be established in the first handover preparation process or the second handover preparation process.

Since the second handover preparation process of initiated in the target cell through the standard handover preparation message may be performed concurrently with the first handover preparation process in which the source controller sends the ENHANCED RELOCATION REQUEST message to the target controller through the inter-controller interconnection interface to request the target controller to reserve wireless channel resources, the target controller may receive two wireless channel resource reserving requests (the ENHANCED RELOCATION REQUEST message sent by the source controller and the request for handover sent by the target MSC). If no further operation is performed, the target controller may reserve wireless channel resources twice when the two messages are received. Since the two handover request messages are sent for the same handover of the same terminal in fact, the target controller needs to reserve wireless channel resources once only (if the reservation is performed twice, resource waste will be caused). In order to avoid resource waste, in the embodiment of the present application, a decision may be made at the target controller, so that wireless channel resources are reserved only once for the handover process of the same terminal.

Specifically, the following method may be adopted. A terminal ID and/or a call ID are carried in both the ENHANCED RELOCATION REQUEST message and request for handover sent by the target MSC, so that the target controller can make a decision after receiving the ENHANCED RELOCATION REQUEST message or the HANDOVER REQUEST sent by the target MSC. For example, the target controller identifies the terminal ID and/or call ID in the message first, and if wireless channel resources have been reserved previously for the terminal ID and/or call ID, wireless channel resources do not need to be reserved again. Either of the ENHANCED RELOCATION REQUEST message and the request for handover sent by the target MSC may reach the target controller first, and the target controller may reserve wireless channel resources according to the message that is received first. That is, if the ENHANCED RELOCATION REQUEST message is received first, the target controller reserves wireless channel resources according to the ENHANCED RELOCATION REQUEST message, and after the request for handover sent by the target MSC is received, the target controller identifies, according to the terminal ID, that wireless channel resources have already been reserved for the terminal, and thus does not reserve wireless channel resources for the terminal again. Similarly, if the request for handover sent by the target MSC is received first, the target controller reserves wireless channel resources according to the request for handover, and does not reserve wireless channel resources again after the ENHANCED RELOCATION REQUEST message is received.

In addition, other methods may also be adopted to ensure that the target controller reserves wireless channel resources only once for a handover process of the same terminal and/or call, for example, the target controller may be instructed to reserve wireless channel resources when the ENHANCED RELOCATION REQUEST message and/or the request for handover sent by the target MSC are received. That is to say, no matter which message reaches the target controller first, the target controller reserves wireless channel resources according to a preset rule. That is, the target controller may reserve wireless channel resources after the ENHANCED RELOCATION REQUEST message is received, after the request for handover sent by the target MSC is received, or after the ENHANCED RELOCATION REQUEST message and the request for handover sent by the target MSC are received. Whenever the reservation is performed, the reservation is performed only once.

It should be noted that, for the case that wireless channel resources are reserved after the request for handover sent by the target MSC is received or after the ENHANCED RELOCATION REQUEST message and the request for handover sent by the target MSC are received, the time saved in the embodiment of the present application compared with the prior art is a time interval between the sending of the HANDOVER REQUEST to the target controller by the target MSC and the returning of a response to the target MSC by the target controller. It is due to that the target controller may return a response message to the source controller directly after the wireless channel resource reservation is complete.

In the CS handover process, the establishment of the transport connection from the source controller to the source MSC may fail and/or the establishment of the transport connection from the target MSC to the target controller may fail. If the establishment of the transport connection from the source controller to the source MSC fails or the establishment of the transport connection from the target MSC to the target controller fails, a normal call may fail after the handover (because the transport connection from the target MSC to the target controller is required for signalling and data transport). Therefore, before the target controller completes the wireless channel resource reservation and sends the ENHANCED RELOCATION RESPONSE message, the target controller may further determine whether the transport connection between the target MSC and the target controller is successfully established, and if the transport connection between the target MSC and the target controller is successfully established, the target controller sends the ENHANCED RELOCATION RESPONSE message; otherwise, the target controller does not send the ENHANCED RELOCATION RESPONSE message, or notifies the source controller that the handover fails.

The determination method may be to determine whether the request for handover sent by the target MSC is received, and if the request for handover sent by the target MSC is received, it is considered that the transport connection between the target MSC and the target controller is successfully established; otherwise, it is considered that the transport connection is not successfully established. It can be seen that, through the determination method used in the embodiment of the present application, an exception of call caused by the failure of the establishment of the transport connection from the source controller to the source MSC or the failure of the establishment of the transport connection from the target MSC to the target controller can be avoided. The transport connection includes a control plane signalling transport connection and/or a user plane data transport connection.

In order to further understand the method according to the first embodiment of the present application, a handover from a 3G TD-SCDMA network to a 2G GSM network is taken as an example for detailed introduction in the following.

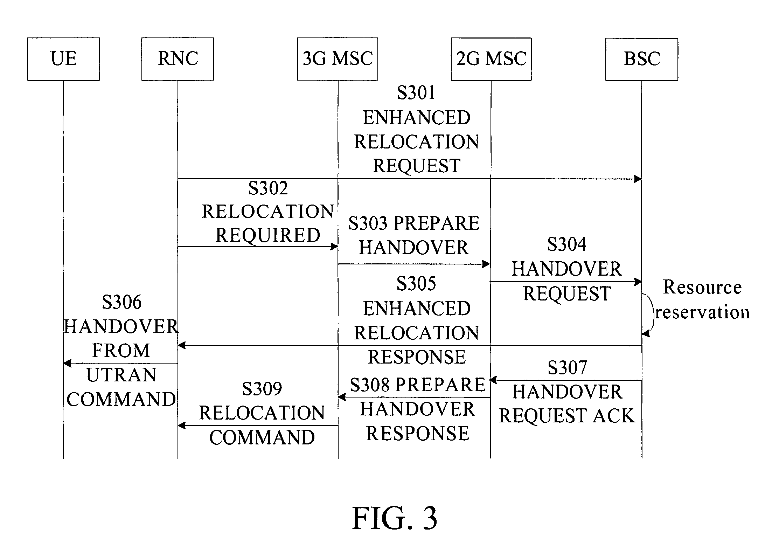

Referring to FIG. 3, in this example, the source controller is an RNC, the target controller is a BSC, and the method includes the following steps.

In step S301, the RNC decides (for example, according to a measurement report reported by a terminal) that the current call or current terminal needs to be handed over to a GSM cell, sends an ENHANCED RELOCATION REQUEST message to the BSC through an inter-controller interconnection interface (for example, Iur-g), and waits for a response from the BSC. The ENHANCED RELOCATION REQUEST message may include, but is not limited to, a part of or all of the following information: a source cell ID (such as a CGI, an RNC-ID, and a Cell ID), a target cell ID (such as a CGI, an RNC-ID, and a Cell ID), a source controller ID (such as an RNC-ID), a target controller ID, a call ID, a terminal ID (such as an IMSI and a TMSI), a channel type, speech encoding and decoding (such as AMR 12.2, HR, and FR), supported capabilities of the terminal (such as Classmark 1, Classmark 2, and Classmark 3), user plane information, transport layer information (for example, including a transport layer address and a binding ID), and speech version information.

In step S302, the RNC sends a handover preparation message, for example, a RELOCATION REQUIRED message, to a 3G MSC.

In step S303, the 3G MSC sends the PREPARE HANDOVER message to a 2G MSC.

In step S304, the 2G MSC sends a HANDOVER REQUEST message to the BSC.

If the same CN is shared, that is, the 2G MSC and the 3G MSC are the same MSC, steps S302 to S304 may be simplified as follows: The RNC sends the RELOCATION REQUIRED message to the MSC and the MSC sends the HANDOVER REQUEST message to the BSC.

In step S305, after receiving the ENHANCED RELOCATION REQUEST message, the BSC reserves wireless channel resources in the target cell, and after completing the wireless channel resource reservation, the BSC returns an ENHANCED RELOCATION RESPONSE message to the RNC through the inter-controller interconnection interface. Of course, step 305 may also be performed after the ENHANCED RELOCATION REQUEST message and/or the HANDOVER REQUEST message sent by the 2G MSC are received.

In the handover preparation process, the BSC receives two handover request messages, that is, the ENHANCED RELOCATION REQUEST message and the HANDOVER REQUEST message. In order to match the two handover request messages to avoid repeated resource reservation, the RELOCATION REQUIRED message in step S302 may carry information such as the terminal ID (such as the IMSI and the TMSI).

If wireless channel resources are reserved after the ENHANCED RELOCATION REQUEST message is received, the BSC may return the ENHANCED RELOCATION RESPONSE message after the wireless channel resource reservation is complete no matter whether the HANDOVER REQUEST message sent by the 2G MSC is received, or return the ENHANCED RELOCATION RESPONSE message to the RNC after the wireless channel resource reservation is complete and the HANDOVER REQUEST message sent by the 2G MSC is received. If wireless channel resources are reserved after the HANDOVER REQUEST message sent by the 2G MSC is received, it is obvious that the BSC cannot return the ENHANCED RELOCATION RESPONSE message to the RNC until the ENHANCED RELOCATION REQUEST message is received.

The ENHANCED RELOCATION RESPONSE message may include, but is not limited to, a part of or all of the following information: cell description (such as Cell Description), wireless channel description, handover reference, encoding and decoding (such as AMR 5.9, FR, HR, and enhanced FR (EFR)), frequency hopping information, encryption information, transport layer information (for example, including a transport layer address and a binding ID).

In step S306, after receiving the ENHANCED RELOCATION RESPONSE message, the RNC sends a HANDOVER FROM UTRAN COMMAND message to the terminal.

After the RNC sends the ENHANCED RELOCATION REQUEST message, the RNC may monitor whether an ENHANCED RELOCATION RESPONSE message is received. If no ENHANCED RELOCATION RESPONSE message is received within a period of time or when a certain event (for example, reception of a RELOCATION COMMAND message) occurs, it is considered that the ENHANCED RELOCATION REQUEST fails, and then a protection mechanism is started. For example, when no ENHANCED RELOCATION RESPONSE message is received within a set period of time, if a RELOCATION COMMAND message of the current handover is received, a HANDOVER COMMAND is sent to the terminal according to the RELOCATION COMMAND message, and if no RELOCATION COMMAND message is received, it is considered that the current handover fails, and a handover to another cell may be attempted again.

In step S307, the BSC establishes an A interface bearer with the MSC for the terminal, and returns a HANDOVER REQUEST ACKNOWLEDGEMENT (ACK) message to the 2G MSC.

In step S308, the 2G MSC returns a PREPARE HANDOVER RESPONSE message to the 3G MSC.

In step S309, the 3G MSC returns a RELOCATION COMMAND to the RNC. In a normal situation, the RNC does not process the signalling due to that the RNC already sends an air-interface HANDOVER COMMAND to the terminal in step S306. When an exception of signalling occurs, causing that the RNC does not receive the ENHANCED RELOCATION RESPONSE message previously, the RNC sends a HANDOVER FROM UTRAN COMMAND message to the terminal after receiving the message.

If the same CN is shared, that is, the 2G MSC and the 3G MSC are the same MSC, steps S307 to S309 may be simplified as follows: The BSC returns the HANDOVER REQUEST ACK message to the MSC and the MSC returns the RELOCATION COMMAND to the RNC.

In the prior art, the RNC does not send the HANDOVER COMMAND to the terminal until the RELOCATION COMMAND message is received. In the embodiment of the present application, steps S301, S305 and S306 are performed concurrently with steps S302, S303, S304, S307, S308 and S309, so as to accelerate the handover preparation.

The terminal receives the HANDOVER FROM UTRAN COMMAND message, performs handover and is connected to the target GSM cell, and sends a HANDOVER COMPLETE message to the BSC. Subsequent processes may be performed according to the prior art, for example, the BSC returns a HANDOVER COMPLETE message to the MSC, the MSC sends an Iu RELEASE COMMAND message to the RNC to command the RNC to release assigned Iu interface resources, and the message carries a release reason "HANDOVER COMPLETE". The RNC releases the related resources and returns a response message Iu RELEASE COMPLETE to the MSC.

Before the RNC sends the HANDOVER COMMAND, terrestrial link resource reservation needs to be complete (including establishment of a transport connection from the target MSC to the BSC, and establishment of and an Abis interface transport connection from the BSC to a base station of the target cell), so as to ensure normal data and signalling transport after the terminal is handed over to the target cell. The transport connection from the target MSC to the target controller is reserved during the handover preparation through the CN (steps S302, S303, S304, S307, S308, and S309). The Abis interface transport connection from the BSC to the base station of the target cell may be reserved during the handover preparation through the inter-controller interconnection interface (steps S301, S305, and S306) or during the handover preparation through the CN (steps S302, S303, S304, S307, S308, and S309).

It can be seen that, in the handover preparation process, the process in which the RNC requests through the ENHANCED RELOCATION REQUEST message the BSC to reserve wireless channel resources and the process in which the RNC requests through the CN the BSC to perform handover preparation are performed concurrently. Therefore, the handover preparation time is shortened.

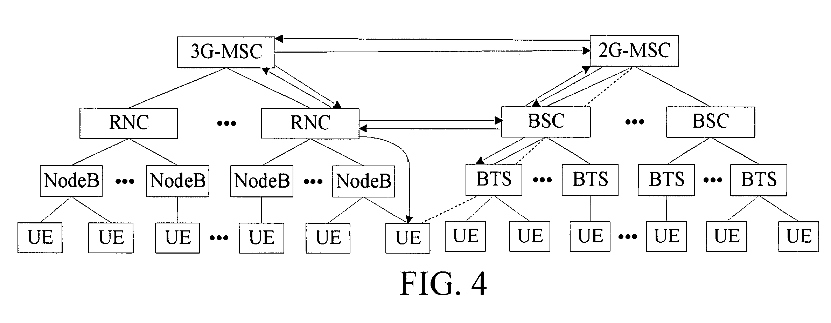

FIG. 4 is a simple schematic view of a network architecture in the example of the handover from the 3G network to the 2G network. In the figure, directions of arrows are flow directions of messages in the handover preparation process, and entities connected through dashed lines represent network entities used for data transport after handover.

A handover from a 2G GSM network to a 3G TD-SCDMA network is taken as an example for detailed introduction in the following.

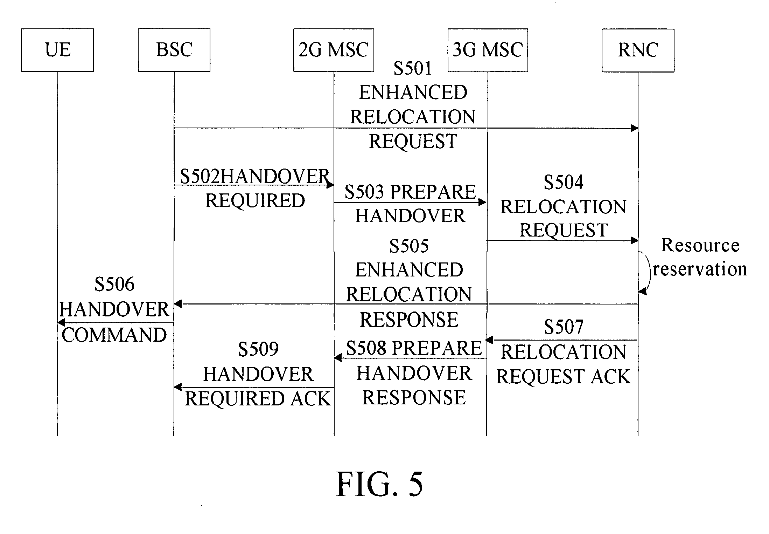

Referring to FIG. 5, in this example, the source controller is a BSC, the target controller is an RNC, and the method includes the following steps.

In step S501, the BSC decides that the current call or current terminal needs to be handed over to a TD-SCDMA cell, sends an ENHANCED RELOCATION REQUEST message to the RNC through an inter-controller interconnection interface (for example, Iur-g), and waits for a response from the RNC. The ENHANCED RELOCATION REQUEST message may include, but is not limited to, a part of or all of the following information: a source cell ID (such as a CGI, an RNC-ID, and a Cell ID), a target cell ID (such as a CGI, an RNC-ID, and a Cell ID), a source controller ID (such as an RNC-ID), a target controller ID, a call ID, a terminal ID (such as an IMSI and a TMSI), a channel type, speech encoding and decoding (such as AMR 12.2, HR, and FR), supported capabilities of the terminal (such as Classmark 1, Classmark 2, and Classmark 3), user plane information, transport layer information (for example, including a transport layer address and a binding ID), and speech version information.

In step S502, the BSC sends a handover preparation message, for example, a HANDOVER REQUIRED message, to a 2G MSC.

In step S503, the 2G MSC sends a PREPARE HANDOVER message to a 3G MSC.

In step S504, the 3G MSC sends a RELOCATION REQUEST message to the RNC.

If the same CN is shared, that is, the 2G MSC and the 3G MSC are the same MSC, steps S302 to S304 may be simplified as follows: The BSC sends the HANDOVER REQUIRED message to the MSC and the MSC sends the RELOCATION REQUEST message to the RNC.

In step S505, the RNC reserves wireless channel resources after receiving the ENHANCED RELOCATION REQUEST message, and after completing the wireless channel resource reservation, the RNC returns an ENHANCED RELOCATION RESPONSE message to the RNC through the inter-controller interconnection interface. Of course, step S505 may also be performed after the ENHANCED RELOCATION REQUEST message and/or the HANDOVER REQUEST message sent by the 3G MSC are received.

If the wireless channel resources are reserved after the ENHANCED RELOCATION REQUEST message is received, the RNC may return the ENHANCED RELOCATION RESPONSE message after the wireless channel resource reservation is complete no matter whether the HANDOVER REQUEST message sent by the 3G MSC is received, or return the ENHANCED RELOCATION RESPONSE message to the BSC after the wireless channel resource reservation is complete and the HANDOVER REQUEST message sent by the 3G MSC is received. If the wireless channel resources are reserved after the HANDOVER REQUEST message sent by the 3G MSC is received, it is obvious that the RNC cannot return the ENHANCED RELOCATION RESPONSE message to the BSC until the ENHANCED RELOCATION REQUEST message is received.

The ENHANCED RELOCATION RESPONSE message may include, but is not limited to, a part of or all of the following information: cell description (such as Cell Description), wireless channel description, handover reference, encoding and decoding (such as AMR 5.9, FR, HR, and EFR), frequency hopping information, encryption information, transport layer information (for example, including a transport layer address and a binding ID).

In step S506, after receiving the ENHANCED RELOCATION RESPONSE message, the BSC sends a HANDOVER COMMAND to the terminal.

After the BSC sends the ENHANCED RELOCATION REQUEST message, the BSC can monitor whether an ENHANCED RELOCATION RESPONSE message is received. If no ENHANCED RELOCATION RESPONSE message is received within a period of time or when a certain event (for example, reception of a HANDOVER REQUIRED ACK message) occurs, it is considered that the ENHANCED RELOCATION REQUEST fails, and then a protection mechanism is started. For example, when no ENHANCED RELOCATION RESPONSE message is received within a set period of time, if a HANDOVER REQUIRED ACK message of the current handover is received, a HANDOVER COMMAND is sent to the terminal according to the HANDOVER REQUIRED ACK message, and if no HANDOVER REQUIRED ACK message is received, it is considered that the current handover fails, and a handover to another cell may be attempted again.

In step S507, the RNC returns a RELOCATION REQUEST ACK message to the 3G MSC.

In step S508, the 3G MSC returns a PREPARE HANDOVER RESPONSE message to the 2G MSC.

In step S509, the 2G MSC returns a HANDOVER REQUIRED ACK message to the BSC.

If the same CN is shared, that is, the 2G MSC and the 3G MSC are the same MSC, steps S507 to S509 may be simplified as follows: The RNC returns the RELOCATION REQUEST ACK message to the MSC and the MSC returns the HANDOVER REQUIRED ACK message to the BSC.

In the prior art, the BSC does not send the HANDOVER COMMAND to the terminal until the HANDOVER REQUIRED ACK message is received. In the present application, steps S501, S505 and S506 are performed concurrently with steps S502, S503, S504, S507, S508 and S509, so as to accelerate the handover preparation.

Before the BSC sends the HANDOVER COMMAND, terrestrial link resource reservation needs to be complete (including establishment of a transport connection from the target MSC to the RNC and an Iub interface transport connection from the RNC to a NodeB of the target cell), so as to ensure normal data transport after the terminal is handed over to the target cell. The transport connection from the target MSC to the RNC is reserved during the handover preparation through the CN (steps S502, S503, S504, S507, S508, and S509). The Iub interface transport connection from the RNC to the NodeB of the target cell may be reserved during the handover preparation through the inter-controller interconnection interface (steps S501, S505, and S506) or during the handover preparation through the CN (steps S502, S503, S504, S507, S508, and S509).

It can be seen that, in the handover preparation process, the process in which the BSC requests through the ENHANCED RELOCATION REQUEST message the RNC to reserve resources and the process in which the BSC requests through the CN the RNC to perform handover preparation are performed concurrently. Therefore, the handover preparation time is shortened.

It can be seen that, in the embodiment of the present application, the process in which the source controller sends the HANDOVER REQUEST message to the source MSC to perform handover preparation and the process in which the source controller sends through the inter-controller interconnection interface the ENHANCED RELOCATION REQUEST message to the target controller to reserve wireless channel resources can be performed concurrently, so that the handover preparation time is shortened, and the source controller can deliver the HANDOVER COMMAND in advance, thereby reducing the probability of phenomena such as call drop due to excessively long handover preparation time.

It should be noted that, the CS handover method according to the embodiment of the present application is applicable to a handover inside a RAT network (for example, handover inside a 2G or 3G network), and is also applicable to a Inter-RAT handover (for example, handover from 3G to 2G or handover from 2G to 3G). For a handover inside a 2G GSM network, the source controller is a BSC in the 2G network, and the target controller is another BSC in the 2G network. For a handover inside a 3G WCDMA or TD-SCDMA network, the source controller is an RNC in the 3G network, and the target controller is another RNC in the 3G network. For a handover from a 3G WCDMA or TD-SCDMA network to a 2G GSM network, the source controller is an RNC in the 3G network, and the target controller is a BSC in the 2G network. For a handover from a 2G GSM network to a 3G WCDMA or TD-SCDMA network, the source controller is a BSC in the 2G network, and the target controller is an RNC in the 3G network. If other networks are involved in the handover, the controller may also be a BSC in a

CDMA network, an eNodeB in an LTE network, or the like.

In addition, the method according to the embodiment of the present application may also be described based on the target controller, which includes the following steps.
1) The target controller receives, through an inter-controller interconnection interface, an ENHANCED RELOCATION REQUEST message sent by a source controller.
2) The target controller reserves wireless channel resources.
3) After the reservation is complete, an ENHANCED RELOCATION RESPONSE message is sent to the source controller through the inter-controller interconnection interface.

The specific steps may be performed as described above, so the details will not be described herein again.

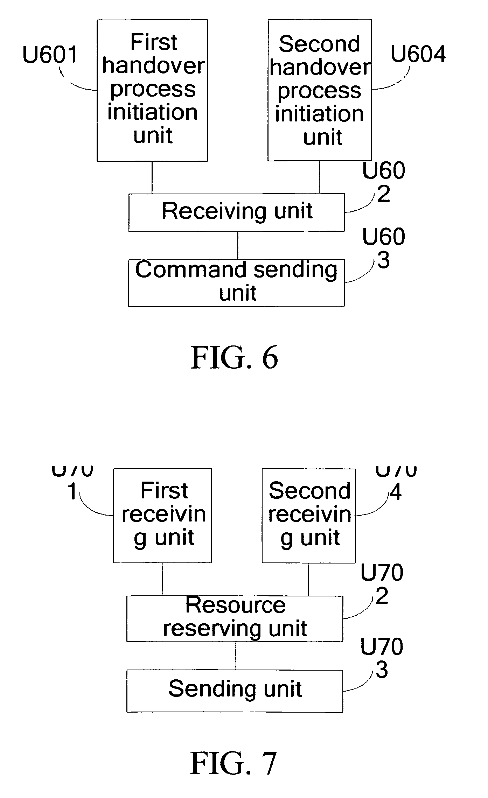

Corresponding to the CS handover method according to the embodiment of the present application, in an embodiment, the present application further provides a CS handover device, located at a source controller end. Referring to FIG. 6, the device includes a first handover process initiation unit U601, a receiving unit U602, and a command sending unit U603.

The first handover process initiation unit U601 is configured to send an ENHANCED RELOCATION REQUEST message to a target controller through an inter-controller interconnection interface, so as to instruct the target controller to reserve wireless channel resources in a target cell.

The receiving unit U602 is configured to receive, through the inter-controller interconnection interface, an ENHANCED RELOCATION RESPONSE message sent by the target controller.

The command sending unit U603 is configured to send a command for handover to a terminal after the ENHANCED RELOCATION RESPONSE message from the target controller is received.

In order to ensure correct data and signalling transport after the handover, the device may further include a second handover process initiation unit U604.

The second handover process initiation unit U604 is configured to instruct an MSC that serves the target controller through an MSC that serves the source controller to send a request for handover to the target controller, so as to initiate handover preparation in the target cell.

Corresponding to the CS handover method according to the embodiment of the present application, in an embodiment, the present application further provides a CS handover device located at a target controller end. Referring to FIG. 7, the device includes a first receiving unit U701, a resource reserving unit U702, and a sending unit U703.

The first receiving unit U701 is configured to receive, through an inter-controller interconnection interface, an ENHANCED RELOCATION REQUEST message sent by a source controller.

The resource reserving unit U702 is configured to reserve wireless channel resources.

The sending unit U703 is configured to send an ENHANCED RELOCATION RESPONSE message to the source controller through the inter-controller interconnection interface after the reservation is complete.

In order to ensure correct data and signalling transport after the handover, the device may further include a second receiving unit U704.

The second receiving unit U704 is configured to receive a request for handover sent by an MSC of a target controller.

The target controller may determine, after receiving the ENHANCED RELOCATION REQUEST message and/or the request for handover sent by the target MSC, whether to reserve wireless channel resources, so as to ensure that wireless channel resources are reserved once only for a handover process, thereby avoiding resource waste, and meanwhile prevent call drop due to a false handover caused by a failure of connection from the target MSC to the target controller or a failure of connection from the source controller to the source MSC.

Therefore, the resource reserving unit U702 includes a first reserving subunit or a second reserving subunit or a third reserving subunit.

The first reserving subunit is configured to reserve wireless channel resources after the ENHANCED RELOCATION REQUEST message is received.

The second reserving subunit is configured to reserve wireless channel resources after the request for handover sent by the MSC that serves the target controller is received.

The third reserving subunit is configured to reserve wireless channel resources after the ENHANCED RELOCATION REQUEST message and the request for handover sent by the MSC that serves the target controller are received.

In addition, the sending unit U703 may include a first sending subunit.

The first sending subunit is configured to return the ENHANCED RELOCATION RESPONSE message to the source controller after the reservation is complete and the request for handover sent by the MSC that serves the target controller is received.

Persons of ordinary skill in the art should understand that all or a part of the steps of the method according to the embodiments of the present application may be implemented by a program instructing relevant hardware. The program may be stored in a computer readable storage medium. When the program is run, the following steps are performed: sending, by a source controller, an ENHANCED RELOCATION REQUEST message to a target controller through an inter-controller interconnection interface, so as to instruct the target controller to reserve wireless channel resources in a target cell; and sending a command for handover to a terminal after an ENHANCED RELOCATION RESPONSE message from the target controller is received. The storage medium may be a read-only memory/random access memory (ROM/RAM), a magnetic disk or an optical disk.

The CS handover method and device of the present application are described in detail above. The principle and implementation of the present application are described herein through specific examples. The description about the embodiments of the present application is merely provided for ease of understanding of the method and core ideas of the present application. Persons of ordinary skill in the art can make variations and modifications to the present application in terms of the specific implementations and application scopes according to the ideas of the present application. Therefore, the specification shall not be construed as a limit to the present application.

## Claims

1. A circuit switching handover method, comprising:
sending (S301, S501), by a source controller that is served by a source mobile switching center, MSC, an ENHANCED RELOCATION REQUEST message to a target controller that is served by a target MSC, through an inter-controller interconnection interface, so as to instruct the target controller to reserve wireless channel resources in a target cell;
instructing (S302, S502), through the source MSC, the target MSC, to send a request for handover to the target controller, so as to initiate handover preparation in the target cell;
sending (S304, S504), by the target MSC, a request for hand over to the target controller and
sending (S306, S506), a command for handover to a terminal after an ENHANCED RELOCATION RESPONSE message from the target controller through the inter-controller interconnection interface is received.

2. The method according to claim 1, wherein the reserving, by the target controller, wireless channel resources in a target cell comprises:
reserving, by the target controller, wireless channel resources, after receiving the ENHANCED RELOCATION REQUEST message and/or the request for handover sent by the target MSC.

3. The method according to any one of claims 1 to 2, wherein the command for handover comprises a HANDOVER COMMAND message or a HANDOVER FROM UTRAN COMMAND message.

4. The method according to claim 1 or 2, wherein the request for handover comprises a HANDOVER REQUEST message or a RELOCATION REQUEST message.

5. A circuit switching handover method, comprising:
receiving (S301, S501), by a target controller that is served by a target mobile switching center, MSC, through an inter-controller interconnection interface, an ENHANCED RELOCATION REQUEST message sent by a source controller that is served by a source MSC;
receiving (S304, S504) a request for handover sent by the target MSC;
reserving, by the target controller, wireless channel resources; and
sending (S305, S505) an ENHANCED RELOCATION RESPONSE message to the source controller through the inter-controller interconnection interface after the reservation is complete.

6. The method according to claim 5, wherein the reserving wireless channel resources comprises:
reserving wireless channel resources after the ENHANCED RELOCATION REQUEST message and/or the request for handover sent by the target MSC are received.

7. The method according to claim 5, wherein the sending (S305, S505) the ENHANCED RELOCATION RESPONSE message to the source controller through the inter-controller interconnection interface after the reservation is complete comprises:
returning (S305, S505) the ENHANCED RELOCATION RESPONSE message to the source controller after the reservation is complete and the request for handover sent by the target MSC is received.

8. The method according to any one of claims 5 to 7, wherein the request for handover comprises a HANDOVER REQUEST message or a RELOCATION REQUEST message.

9. A circuit switching handover device, located at a source controller that is served by a source mobile switching center, MSC end, comprising:
a first handover process initiation unit (U601), configured to send a ENHANCED RELOCATION REQUEST message to a target controller that is served by a target MSC through an inter-controller interconnection interface, so as to instruct the target controller to reserve wireless channel resources in a target cell;
a second handover process initiation unit (U604), configured to instruct the target MSC, through the source MSC to send a request for handover to the target controller, so as to initiate handover preparation in the target cell;
a receiving unit (U602), configured to receive an ENHANCED RELOCATION RESPONSE message sent by the target controller through the inter-controller interconnection interface; and
a command sending unit (U603), configured to send a command for handover to a terminal after the ENHANCED RELOCATION RESPONSE message from the target controller is received.

10. The device according to claim 9, wherein the command for handover comprises a HANDOVER COMMAND message or a HANDOVER FROM UTRAN COMMAND message.

11. A circuit switching handover device, located at a target controller that is served by a target mobile switching center, MSC end, comprising:
a first receiving unit (U701), configured to receive an ENHANCED RELOCATION REQUEST message sent by a source controller that is served by a source MSC through an inter-controller interconnection interface;
a second receiving unit (U704), configured to receive a request for handover sent by the target MSC;
a resource reserving unit (U702), configured to reserve wireless channel resources; and
a sending unit (U703), configured to send an ENHANCED RELOCATION RESPONSE message to the source controller through the inter-controller interconnection interface after the reservation is complete.

12. The device according to claim 11, wherein the resource reserving unit (U702) comprises:
a first reserving subunit, configured to reserve wireless channel resources after the ENHANCED RELOCATION REQUEST message is received;
or,
a second reserving subunit, configured to reserve wireless channel resources after the request for handover sent by the target MSC is received;
or,
a third reserving subunit, configured to reserve wireless channel resources after the ENHANCED RELOCATION REQUEST message and the request for handover sent by the target MSC are received.

13. The device according to claim 11, wherein the request for handover comprises a HANDOVER REQUEST message or a RELOCATION REQUEST message.

## Patentansprüche

1. Leitungsvermittlungs-Verbindungsübergabeverfahren, das Folgendes umfasst:
Senden (S301, S501) durch eine Quell-Steuereinrichtung, die durch eine Quell-Mobilvermittlungsstelle, Quell-MSC, bedient wird, einer ENHANCED RELOCATION REQUEST-Nachricht durch eine Zwischensteuereinrichtungs-Verbindungsschnittstelle an eine Ziel-Steuereinrichtung, die durch eine Ziel-MSC bedient wird, um die Ziel-Steuereinrichtung anzuweisen, drahtlose Kanalbetriebsmittel in einer Zielzelle zu reservieren;
Anweisen (S302, S502) der Ziel-MSC durch die Quell-MSC, eine Anforderung für die Verbindungsübergabe an die Ziel-Steuereinrichtung zu senden, um die Verbindungsübergabe-Vorbereitung in der Zielzelle einzuleiten;
Senden (S304, S504) durch die Ziel-MSC einer Anforderung für die Verbindungsübergabe an die Ziel-Steuereinrichtung; und
Senden (S306, S506) eines Befehls für die Verbindungsübergabe an ein Endgerät, nachdem eine ENHANCED RELOCATION RESPONSE-Nachricht durch die Zwischensteuereinrichtungs-Verbindungsschnittstelle von der Ziel-Steuereinrichtung empfangen worden ist.

2. Verfahren nach Anspruch 1, wobei das Reservieren drahtloser Kanalbetriebsmittel in einer Zielzelle durch die Ziel-Steuereinrichtung Folgendes umfasst:
Reservieren durch die Ziel-Steuereinrichtung drahtloser Kanalbetriebsmittel nach dem Empfangen der ENHANCED RELOCATION REQUEST-Nachricht und/oder der durch die Ziel-MSC gesendeten Anforderung für die Verbindungsübergabe.

3. Verfahren nach einem der Ansprüche 1 bis 2, wobei der Befehl für die Verbindungsübergabe eine HANDOVER COMMAND-Nachricht oder eine HANDOVER FROM UTRAN COMMAND-Nachricht umfasst.

4. Verfahren nach Anspruch 1 oder 2, wobei die Anforderung für die Verbindungsübergabe eine HANDOVER REQUEST-Nachricht oder eine RELOCATION REQUEST-Nachricht umfasst.

5. Leitungsvermittlungs-Verbindungsübergabeverfahren, das Folgendes umfasst:
Empfangen (S301, S501) durch eine Ziel-Steuereinrichtung, die durch eine Ziel-Mobilvermittlungsstelle, Ziel-MSC, bedient wird, einer durch eine Quell-Steuereinrichtung, die durch eine Quell-MSC bedient wird, gesendeten ENHANCED RELOCATION REQUEST-Nachricht über eine Zwischensteuereinrichtungs-Verbindungsschnittstelle;
Empfangen (S304, S504) einer durch die Ziel-MSC gesendeten Anforderung für die Verbindungsübergabe;
Reservieren drahtloser Kanalbetriebsmittel durch die Ziel-Steuereinrichtung; und
Senden (S305, S505) einer ENHANCED RELOCATION RESPONSE-Nachricht durch die Zwischensteuereinrichtungs-Verbindungsschnittstelle an die Quell-Steuereinrichtung, nachdem die Reservierung abgeschlossen ist.

6. Verfahren nach Anspruch 5, wobei das Reservieren drahtloser Kanalbetriebsmittel Folgendes umfasst:
Reservieren drahtloser Kanalbetriebsmittel, nachdem die ENHANCED RELOCATION REQUEST-Nachricht und/oder die von der Ziel-MSC gesendete Anforderung für die Verbindungsübergabe empfangen worden sind.

7. Verfahren nach Anspruch 5, wobei das Senden (S305, S505) der ENHANCED RELOCATION RESPONSE-Nachricht durch die Zwischensteuereinrichtungs-Verbindungsschnittstelle an die Quell-Steuereinrichtung, nachdem die Reservierung abgeschlossen ist, Folgendes umfasst:
Zurückschicken (S305, S505) der ENHANCED RELOCATION RESPONSE-Nachricht an die Quell-Steuereinrichtung, nachdem die Reservierung abgeschlossen ist und die durch die Ziel-MSC gesendete Anforderung für die Verbindungsübergabe empfangen worden ist.

8. Verfahren nach einem der Ansprüche 5 bis 7, wobei die Anforderung für die Verbindungsübergabe eine HANDOVER REQUEST-Nachricht oder eine RELOCATION REQUEST-Nachricht umfasst.

9. Leitungsvermittlungs-Verbindungsübergabevorrichtung, die sich in einer Quell-Steuereinrichtung befindet, die durch eine Seite einer Quell-Mobilvermittlungsstelle, Quell-MSC-Seite, bedient wird, die Folgendes umfasst:
eine erste Verbindungsübergabeprozess-Einleiteeinheit (U601), die konfiguriert ist, eine ENHANCED RELOCATION REQUEST-Nachricht durch eine Zwischensteuereinrichtungs-Verbindungsschnittstelle an eine Ziel-Steuereinrichtung, die durch eine Ziel-MSC bedient wird, zu senden, um die Ziel-Steuereinrichtung anzuweisen, drahtlose Kanalbetriebsmittel in einer Zielzelle zu reservieren;
eine zweite Verbindungsübergabeprozess-Einleiteeinheit (U604), die konfiguriert ist, durch die Quell-MSC die Ziel-MSC anzuweisen, eine Anforderung für die Verbindungsübergabe an die Ziel-Steuereinrichtung zu senden, um die Verbindungsübergabe-Vorbereitung in der Zielzelle einzuleiten;
eine Empfangseinheit (U602), die konfiguriert ist, eine durch die Ziel-Steuereinrichtung durch die Zwischensteuereinrichtungs-Verbindungsschnittstelle gesendete ENHANCED RELOCATION RESPONSE-Nachricht zu empfangen; und
eine Befehlssendeeinheit (U603), die konfiguriert ist, einen Befehl für die Verbindungsübergabe an ein Endgerät zu senden, nachdem die ENHANCED RELOCATION RESPONSE-Nachricht von der Ziel-Steuereinrichtung empfangen worden ist.

10. Vorrichtung nach Anspruch 9, wobei der Befehl für die Verbindungsübergabe eine HANDOVER COMMAND-Nachricht oder eine HANDOVER FROM UTRAN COMMAND-Nachricht umfasst.

11. Leitungsvermittlungs-Verbindungsübergabevorrichtung, die sich in einer Ziel-Steuereinrichtung befindet, die durch eine Seite einer Ziel-Mobilvermittlungsstelle, Ziel-MSC-Seite, bedient wird, die Folgendes umfasst:
eine erste Empfangseinheit (U701), die konfiguriert ist, eine durch eine Quell-Steuereinrichtung, die durch eine Quell-MSC bedient wird, durch eine Zwischensteuereinrichtungs-Verbindungsschnittstelle gesendete ENHANCED RELOCATION REQUEST-Nachricht zu empfangen;
eine zweite Empfangseinheit (U704), die konfiguriert ist, eine durch die Ziel-MSC gesendete Anforderung für die Verbindungsübergabe zu empfangen;
eine Betriebsmittelreservierungseinheit (U702), die konfiguriert ist, drahtlose Kanalbetriebsmittel zu reservieren; und
eine Sendeeinheit (U703), die konfiguriert ist, eine ENHANCED RELOCATION RESPONSE-Nachricht durch die Zwischensteuereinrichtungs-Verbindungsschnittstelle an die Quell-Steuereinrichtung zu senden, nachdem die Reservierung abgeschlossen ist.

12. Vorrichtung nach Anspruch 11, wobei die Betriebsmittelreservierungseinheit (U702) Folgendes umfasst:
eine erste Reservierungsuntereinheit, die konfiguriert ist, drahtlose Kanalbetriebsmittel zu reservieren, nachdem die ENHANCED RELOCATION REQUEST-Nachricht empfangen worden ist;
oder
eine zweite Reservierungsuntereinheit, die konfiguriert ist, drahtlose Kanalbetriebsmittel zu reservieren, nachdem die durch die Ziel-MSC gesendete Anforderung für die Verbindungsübergabe empfangen worden ist;
oder
eine dritte Reservierungsuntereinheit, die konfiguriert ist, drahtlose Kanalbetriebsmittel zu reservieren, nachdem die ENHANCED RELOCATION REQUEST-Nachricht und die durch die Ziel-MSC gesendete Anforderung für die Verbindungsübergabe empfangen worden sind.

13. Vorrichtung nach Anspruch 11, wobei die Anforderung für die Verbindungsübergabe eine HANDOVER REQUEST-Nachricht oder eine RELOCATION REQUEST-Nachricht umfasst.

## Revendications

1. Procédé de transfert intercellulaire à commutation de circuits, comprenant les étapes suivantes : envoyer (S301, S501), par un contrôleur source qui est servi par un centre de commutation mobile source, MSC, un message de requête de relocation améliorée à un contrôleur cible, qui est servi par un MSC cible, par l'intermédiaire d'une interface d'interconnexion inter-contrôleur, afin d'ordonner au contrôleur cible de réserver des ressources de canal sans fil dans une cellule cible ;
ordonner (S302, S502), par l'intermédiaire du MSC source, au MSC cible, d'envoyer une requête de transfert intercellulaire au contrôleur cible, afin d'initier une préparation de transfert intercellulaire dans la cellule cible ;
envoyer (S304, S504), par le MSC cible, une requête de transfert intercellulaire au contrôleur cible et
envoyer (S306, S506) une commande de transfert intercellulaire à un terminal après la réception d'un message de réponse de relocation améliorée transmis à partir du contrôleur cible par l'intermédiaire de l'interface d'interconnexion inter-contrôleur.

2. Procédé selon la revendication 1, dans lequel l'étape consistant à réserver, par le contrôleur cible, des ressources de canal sans fil dans une cellule cible comprend :
réserver, par le contrôleur cible, des ressources de canal sans fil, après la réception du message de requête de relocation améliorée et/ou de la requête de transfert intercellulaire envoyée par le MSC cible.

3. Procédé selon l'une quelconque des revendications 1 à 2, dans lequel la commande de transfert intercellulaire comprend un message de commande de transfert intercellulaire ou un message de commande de transfert intercellulaire à partir d'un UTRAN.

4. Procédé selon la revendication 1 ou 2, dans lequel la requête de transfert intercellulaire comprend un message de requête de transfert intercellulaire ou un message de requête de relocation.

5. Procédé de transfert intercellulaire à commutation de circuits, comprenant les étapes suivantes :
recevoir (S301, S501), par un contrôleur cible qui est servi par un centre de commutation mobile cible, MSC, par l'intermédiaire d'une interface d'interconnexion inter-contrôleur, un message de requête de relocation améliorée envoyé par un contrôleur source qui est servi par un MSC source ;
recevoir (S304, S504) une requête de transfert intercellulaire envoyée par le MSC cible ;
réserver, par le contrôleur cible, des ressources de canal sans fil ; et
envoyer (S305, S505) un message de réponse de relocation améliorée au contrôleur source par l'intermédiaire de l'interface d'interconnexion inter-contrôleur une fois la réservation terminée.

6. Procédé selon la revendication 5, dans lequel l'étape consistant à réserver des ressources de canal sans fil comprend :
réserver des ressources de canal sans fil après la réception du message de requête de relocation améliorée et/ou de la requête de transfert intercellulaire envoyée par le MSC cible.

7. Procédé selon la revendication 5, dans lequel l'étape consistant à envoyer (S305, S505) le message de réponse de relocation améliorée au contrôleur source par l'intermédiaire de l'interface d'interconnexion inter-contrôleur une fois la réservation terminée comprend :
renvoyer (S305, S505) le message de réponse de relocation améliorée au contrôleur source une fois la réservation terminée et après la réception de la requête de transfert intercellulaire envoyée par le MSC cible.

8. Procédé selon l'une quelconque des revendications 5 à 7, dans lequel la requête de transfert intercellulaire comprend un message de requête de transfert intercellulaire ou un message de requête de relocation.

9. Dispositif de transfert intercellulaire à commutation de circuits, situé au niveau d'un contrôleur source qui est servi par un centre de commutation mobile source, extrémité MSC, comprenant :
une première unité d'initiation de processus de transfert intercellulaire (U601), configurée pour envoyer un message de requête de relocation améliorée à un contrôleur cible qui est servi par un MSC cible par l'intermédiaire d'une interface d'interconnexion inter-contrôleur, afin d'ordonner au contrôleur cible de réserver des ressources de canal sans fil dans une cellule cible ;
une deuxième unité d'initiation de processus de transfert intercellulaire (U604), configurée pour ordonner au MSC cible, par l'intermédiaire du MSC source d'envoyer une requête de transfert intercellulaire au contrôleur cible, afin d'initier une préparation de transfert intercellulaire dans la cellule cible ;
une unité de réception (U602), configurée pour recevoir un message de réponse de relocation améliorée envoyé par le contrôleur cible par l'intermédiaire de l'interface d'interconnexion inter-contrôleur ; et
une unité d'envoi de commande (U603), configurée pour envoyer une commande de transfert intercellulaire à un terminal après la réception du message de réponse de relocation améliorée transmis à partir du contrôleur cible.

10. Dispositif selon la revendication 9, dans lequel la commande de transfert intercellulaire comprend un message de commande de transfert intercellulaire ou un message de commande de transfert intercellulaire à partir d'un UTRAN.

11. Dispositif de transfert intercellulaire à commutation de circuits, situé au niveau d'un contrôleur cible qui est servi par un centre de commutation mobile cible, extrémité MSC, comprenant :
une première unité de réception (U701), configurée pour recevoir un message de requête de relocation améliorée envoyé par un contrôleur source qui est servi par un MSC source par l'intermédiaire d'une interface d'interconnexion inter-contrôleur ;
une deuxième unité de réception (U704), configurée pour recevoir une requête de transfert intercellulaire envoyée par le MSC cible ;
une unité de réservation de ressources (U702), configurée pour réserver des ressources de canal sans fil ; et
une unité émettrice (U703), configurée pour envoyer un message de réponse de relocation améliorée au contrôleur source par l'intermédiaire de l'interface d'interconnexion inter-contrôleur une fois la réservation terminée.

12. Dispositif selon la revendication 11, dans lequel l'unité de réservation de ressources (U702) comprend :
une première sous-unité de réservation, configurée pour réserver des ressources de canal sans fil après la réception du message de requête de relocation améliorée ;
ou,
une deuxième sous-unité de réservation, configurée pour réserver des ressources de canal sans fil après la réception de la requête de transfert intercellulaire envoyée par le MSC cible ;
ou,
une troisième sous-unité de réservation, configurée pour réserver des ressources de canal sans fil après la réception du message de requête de relocation améliorée et de la requête de transfert intercellulaire envoyée par le MSC cible.

13. Dispositif selon la revendication 11, dans lequel la requête de transfert intercellulaire comprend un message de requête de transfert intercellulaire ou un message de requête de relocation.
